# EUROPÄISCHE PATENTANMELDUNG

(11) **EP 4 443 657 A1**
(43) Veröffentlichungstag der Anmeldung: **09.10.2024**
(21) Anmeldenummer: 23166794.0
(22) Anmeldetag: 05.04.2023
(51) Int. Cl.: H01R 4/56, H01M 50/502, H01R 4/70, H01R 11/28, H01R 13/44, H02G 3/00

(54) **MODULVERBINDER**

(71) Anmelder: Intercable Automotive Solutions GmbH, 39031 Bruneck (IT)
(72) Erfinder: BAUMGARTNER, Christoph, 39031 Bruneck (IT)
(74) Vertreter: Hernandez, Yorck

(57) **Zusammenfassung**

Ein Modulverbinder (100, 200), insbesondere für Batterien für ein Fahrzeug, mit zwei Verbindungsteilen (110, 210, 120), die elektrisch leitend miteinander verbindbar sind, wobei das erste Verbindungsteil (110, 210) ein erstes Leiterelement (111) und ein erstes Kontaktelement (112) aufweist, wobei das zweite Verbindungsteil (120) ein zweites Leiterelement (121) und ein zweites Kontaktelement (122) aufweist, wobei die beiden Verbindungsteile (110, 210, 120) über ein gemeinsames Befestigungselement (130) miteinander verbindbar sind, wobei, wenn die beiden Verbindungsteile (110, 210, 120) miteinander nicht verbunden sind, in dem ersten Verbindungsteil (110, 210) ein Zwischenraum (113) zwischen dem Befestigungselement (130) und dem ersten Kontaktelement (112) erstes Leiterelement (111) bereitgestellt ist und das Befestigungselement (130) in einer Parkposition angeordnet ist, wobei in dem Zwischenraum (113) zwischen dem Befestigungselement (130) und dem ersten Kontaktelement (112) sowie dem ersten Leiterelement (111) ein Trennelement (140) zur elektrischen Isolierung des Befestigungselements (130) angeordnet ist, wobei das Trennelement (140) eine Hülsenform aufweist, wobei zur Herstellung einer elektrisch leitenden Verbindung zwischen den beiden Verbindungsteilen (110, 210, 120) der Modulverbinder (100, 200) ausgebildet ist, durch eine Veränderung der Position des Befestigungselements (130) von einem ersten Zustand, in dem keine elektrische leitende Verbindung zwischen beiden Verbindungsteilen (110, 210, 120) besteht, in einen zweiten, elektrisch leitenden Zustand der beiden Verbindungsteile (110, 210, 120), eine Kontaktfläche (112a) des ersten Kontaktelements (112) des ersten Leiterelements (111) mit einer Kontaktfläche (121a) des zweiten Leiterelements (121) in direkten Kontakt zu bringen, wobei das erste Verbindungsteil (110, 210) ein erstes, äußeres Berührschutzelement (114) und ein erstes, inneres Berührschutzelement (115) aufweist, wobei das erste, äußere Berührschutzelement (114) eine äußere, elektrisch isolierende Schutzmanschette (114a) aufweist, die das erste Kontaktelement (112) und das Befestigungselement (130) zumindest teilweise umgibt, wobei das erste, innere Berührschutzelement (115) durch das Befestigungselement (130) gebildet wird.

## Beschreibung

### Gebiet der Erfindung

Die vorliegende Erfindung betrifft einen Modulverbinder, insbesondere ein Modulverbinder für Batterien für ein Fahrzeug.

### Hintergrund

Modulverbinder sind aus dem Stand der Technik grundsätzlich bekannt. Modulverbinder werden eingesetzt, um einzelne Module, die eine Batterie in einem Fahrzeug bilden, miteinander zu verbinden. Da derartige Module aus stromführenden Komponenten bestehen, kann die direkte Berührung dieser Module durch Menschen, wie zum Beispiel einem Servicemitarbeiter in einer Werkstatt, gefährlich sein, weshalb ein entsprechender Berührschutz vorzusehen ist, um die Gefahr zu minimieren, dass stromführende Teile des Modulverbinders während eines Wartungs- oder Reparaturfalls am Fahrzeug berührt werden können.

In der EP 34 19 119 B1 wird ein derartiger Modulverbinder beschrieben, der dieser Gefahr mit einem entsprechenden Berührschutz begegnet. Die Übertragung von Strömen zwischen zwei Leitern erfolgt hierbei über den Modulverbinder mittels einer sogenannte Strombrücke, welche als Kontakthülse ausgebildet ist. Diese besteht wiederum aus zwei stromführenden Leitern, die für eine elektrische Kontaktierung miteinander verbunden werden. Der Berührschutz sieht dabei vor, dass stromführende Teile der Strombrücke nicht direkt durch den Menschen zugänglich sind. Dies wird bereitgestellt durch eine Manschette, welche die Kontakte und ein Befestigungselement umgibt, sowie durch das Befestigungselement, welches an der Spitze eine elektrisch isolierte Kappe aufweist.

Ein Problem bei Modulverbindern mit derartig ausgeführten Berührschutz besteht jedoch darin, dass mit Dauer der Benutzung des Modulverbinders, also einem wiederholten elektrischen Kontaktieren und Trennen sowie einem mechanischen koppeln und entkoppeln der beiden stromführenden Teile des Modulverbinders, die elektrische Isolierung der elektrisch isolierten Kappe des Befestigungselements zunehmend abnimmt und/oder beschädigt werden kann. Dadurch kann ein derart bereitgestellter Modulverbinder mit einem derartig ausgeführten Berührschutz nicht zuverlässig einen geeigneten Berührschutz bereitstellen. Dies beschriebene Einsatzszenario beeinträchtigt die Lebensdauer und die Funktionalität des Modulverbinders und führt letztlich zu einem erhöhten Wartungsbedarf für den Modulverbinder mit den damit verbundenen Mehrkosten.

In diesem Zusammenhang hat sich nun herausgestellt, dass ein Bedarf besteht, einen verbesserten Modulverbinder bereitzustellen, der unter Einsatz von einfachen Mitteln die Nachteile von bekannten Modulverbindern minimiert und die Einsatzbereitschaft und Funktionalität des erfindungsgemäßen Modulverbinders zuverlässig gewährleistet.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafter Weise weiter.

### Zusammenfassung der Erfindung

Ein erfindungsgemäßer Modulverbinder, insbesondere ein Modulverbinder für Batterien für ein Fahrzeug, mit zwei Verbindungsteilen, die elektrisch leitend miteinander verbindbar sind. Das erste Verbindungsteil weist ein erstes Leiterelement und ein erstes Kontaktelement auf. Das zweite Verbindungsteil weist ein zweites Leiterelement und ein zweites Kontaktelement auf. Die beiden Verbindungsteile sind über ein gemeinsames Befestigungselement miteinander verbindbar, wobei, wenn die beiden Verbindungsteile miteinander nicht verbunden sind, in dem ersten Verbindungsteil ein Zwischenraum zwischen dem Befestigungselement und dem ersten Kontaktelement erstes Leiterelement bereitgestellt ist und das Befestigungselement in einer Parkposition angeordnet ist. In dem Zwischenraum zwischen dem Befestigungselement und dem ersten Kontaktelement sowie dem ersten Leiterelement ist ein Trennelement zur elektrischen Isolierung des Befestigungselements angeordnet. Das Trennelement weist eine Hülsenform auf. Zur Herstellung einer elektrisch leitenden Verbindung zwischen den beiden Verbindungsteilen ist der Modulverbinder ausgebildet, durch eine Veränderung der Position des Befestigungselements von einem ersten Zustand, in dem keine elektrische leitende Verbindung zwischen beiden Verbindungsteilen besteht, in einen zweiten, elektrisch leitenden Zustand der beiden Verbindungsteile, eine Kontaktfläche des ersten Kontaktelements des ersten Leiterelements mit einer Kontaktfläche des zweiten Leiterelements in direkten Kontakt zu bringen. Das erste Verbindungsteil weist ein erstes, äußeres Berührschutzelement und ein erstes, inneres Berührschutzelement auf, wobei das erste, äußere Berührschutzelement eine äußere, elektrisch isolierende Schutzmanschette aufweist, die das erste Kontaktelement und das Befestigungselement zumindest teilweise umgibt, und wobei das erste, innere Berührschutzelement durch das Befestigungselement gebildet wird.

Der Grundgedanke der vorliegenden Erfindung besteht deshalb darin, dass durch das Bereitstellen eines Trennelements in dem Zwischenraum zwischen dem Befestigungselement und dem ersten Kontaktelement des ersten Leiterelements eine geeignete elektrische Isolierung des Befestigungselements in einer Parkposition, wenn die beiden Verbindungsteile miteinander nicht verbunden sind, erzielt werden kann. Dadurch kann auf zusätzliche, verschleiß- und beschädigungsanfällige zusätzliche isolierende Komponenten an dem Befestigungselement verzichtet werden. Damit kann ein Modulverbinder bereitgestellt werden, welcher auch nach mehrmaligen Steck- oder Kontaktierungszyklen zwischen den beiden Verbindungselementen des erfindungsgemäßen Modulverbinders einen geeigneten Berührschutz bereitstellt.

Durch das Trennelement in dem Zwischenraum zwischen dem Befestigungselement und dem ersten Kontaktelement des ersten Leiterelements kann auf zusätzliche, verschleiß- und beschädigungsanfällige zusätzliche isolierende Komponenten an dem Befestigungselement verzichtet werden, sodass der erfindungsgemäße Modulverbinder eine verbesserte Funktionalität sowie eine erhöhte Lebensdauer, die zugleich mit einer verminderten Wartungsanfälligkeit des Modulverbinders einhergeht, aufweist.

In einer weiteren Ausführungsform des erfindungsgemäßen Modulverbinders ist der Modulverbinder ausgebildet, bei einem Öffnen des Befestigungselementes, das Befestigungselement in die Parkposition zu bringen. Dadurch wird auf einfache Weise eine Berührschutzfunktion bereitgestellt, wenn das erste Verbindungsteil und das zweite Verbindungsteil nicht miteinander gekoppelt sind.

In einer weiteren Ausführungsform des erfindungsgemäßen Modulverbinders ist das Trennelement aus einem faserverstärken Kunststoff bereitgestellt. Durch das Bereitstellen des Trennelements mit einem faserverstärkten Kunststoff kann eine zusätzliche zuverlässige elektrische Isolierung des Befestigungselements vor dem ersten Kontaktelement des ersten Leiterelements bereitgestellt werden. Zusätzlich kann durch die Verwendung eines faserverstärkten Kunststoffs eine langlebige und gleichbleibende elektrische Isolierung bereitgestellt werden.

In einer weiteren Ausführungsform des erfindungsgemäßen Modulverbinders ist das Trennelement aus einem glasfaserverstärkter Duroplast bereitgestellt. Durch das Bereitstellen des Trennelements mit einem glasfaserverstärkten Duroplast kann eine zusätzliche zuverlässige elektrische Isolierung des Befestigungselements vor dem ersten Kontaktelement des ersten Leiterelements bereitgestellt werden. Zusätzlich kann durch die Verwendung eines faserverstärkten Kunststoffs eine langlebige und gleichbleibende elektrische Isolierung bereitgestellt werden.

In einer weiteren Ausführungsform des erfindungsgemäßen Modulverbinders wird das erste, innere Berührschutzelement durch das Befestigungselement gebildet, wenn sich das Befestigungselement in der Parkposition befindet. Dadurch wird der Vorteil erreicht, dass eine direkte Berührung von allen nicht-strom-oder spannungsführenden Komponenten und strom- oder spannungsführenden Komponenten des Modulverbinders verhindert wird.

In einer weiteren Ausführungsform des erfindungsgemäßen Modulverbinders überragt die elektrisch isolierende Schutzmanschette das erste Kontaktelement. Somit kann ein geeigneter Berührschutz des ersten Verbindungselements bereitgestellt werden.

In einer weiteren Ausführungsform des erfindungsgemäßen Modulverbinders weist das erste Verbindungsteil ein Halteelement auf, wobei das Halteelement derart ausgebildet ist, dass das Befestigungselement, wenn die beiden Verbindungsteile miteinander nicht verbunden sind, in der Parkposition anordnet ist. Dies umfasst, dass das Befestigungselement im nicht verbundenen Zustand der beiden Verbindungsteile in der Parkposition gehalten ist und/oder nach einem lösen der beiden Verbindungsteile des Modulverbinders von einer Endposition wieder in die Parkposition zurückkehrt. Dadurch kann sichergestellt werden, dass das Befestigungselement in der Parkposition angeordnet ist und damit elektrisch isoliert von dem ersten Kontaktelement des ersten Leiterelements ist, wenn die beiden Verbindungsteile miteinander nicht verbunden sind.

In einer weiteren Ausführungsform des erfindungsgemäßen Modulverbinders weist das erste Verbindungsteil ferner ein erstes weiteres Berührschutzelement auf, wobei das erste weitere Berührschutzelement durch ein Abdeckelement des Befestigungselements gebildet ist. Dadurch wird der Vorteil erreicht, dass eine direkte Berührung von allen nicht-strom-oder spannungsführenden Komponenten und strom- oder spannungsführenden Komponenten des Modulverbinders verhindert wird.

In einer weiteren Ausführungsform des erfindungsgemäßen Modulverbinders weist das Abdeckelement eine Durchgangsöffnung auf. Dadurch wird der Vorteil erreicht, dass das Befestigungselement betätigt werden kann, aber eine direkte Berührung von strom- oder spannungsführenden Komponenten des Modulverbinders verhindert wird.

In einer weiteren Ausführungsform des erfindungsgemäßen Modulverbinders bildet das Abdeckelement und das Halteelement gemeinsam ein einteiliges Element aus, und/oder das einteilige Element bestehend aus dem Abdeckelement und dem Halteelement ist drehbar um eine Rotationsachse des Befestigungselements. Dadurch kann eine Vereinfachte Bedienung des Befestigungselements bereitgestellt werden.

In einer weiteren Ausführungsform des erfindungsgemäßen Modulverbinders ist das Befestigungselement eine Schraube mit einem Kopfabschnitt und einem Körperabschnitt, wobei der Körperabschnitt frei von einem elektrisch isolierenden Material ist. Durch das Ausbilden des Befestigungselements als eine Schraube kann eine einfache und lösbare Verbindung des ersten und des zweiten Verbindungsteils des Modulverbinders bereitgestellt werden.

In einer weiteren Ausführungsform des erfindungsgemäßen Modulverbinders weist das zweite Verbindungsteil ferner ein zweites äußeres Berührschutzelement, ein zweites inneres Berührschutzelement, ein weiteres Berührschutzelement und ein Gegenelement zu dem Befestigungselement auf, wobei das zweite äußere Berührschutzelement eine äußere, elektrisch isolierende Schutzmanschette aufweist, die das zweite Kontaktelement und das zweite Leiterelement, das Gegenelement und/oder die Kontaktfläche des zweiten Leiterelements zumindest teilweise umgibt, wobei das zweite innere Berührschutzelement an dem Gegenelement angeordnet ist. Dadurch wird der Vorteil erzielt, dass der Modulverbinder, insbesondere das zweite Verbindungsteil, eine umfassende und flexible Schutzfunktion gegen unbeabsichtigtes Berühren von strom- oder spannungsführenden Komponenten aufweist, unabhängig davon, von welcher Seite oder Position man den Modulverbinder greift.

In einer weiteren Ausführungsform des erfindungsgemäßen Modulverbinders überragt die elektrisch isolierende Schutzmanschette das zweite Kontaktelement. Somit kann ein geeigneter Berührschutz für das zweite Verbindungselement bereitgestellt werden.

In einer weiteren Ausführungsform des erfindungsgemäßen Modulverbinders ist das zweite innere Berührschutzelement eine elektrisch isolierende Schutzmanschette. Dadurch wird der Vorteil erzielt, dass der Modulverbinder, insbesondere das zweite Verbindungsteil, eine verbesserte umfassende und flexible Schutzfunktion gegen unbeabsichtigtes Berühren von strom- oder spannungsführenden Komponenten aufweist, unabhängig davon, von welcher Seite oder Position man den Modulverbinder greift.

### Beschreibung der bevorzugten Ausführungsformen

Nachfolgend wird eine detaillierte Beschreibung der Figuren gegeben, darin ist zeigt
- **Figur 1**: eine schematische Schnittansicht einer ersten erfindungsgemäßen Ausführungsform eines Modulverbinders im nicht-verbundenen Zustand;
- **Figur 2**: eine schematische Schnittansicht einer ersten erfindungsgemäßen Ausführungsform eines Modulverbinders im verbundenen Zustand;
- **Figur 3**: eine schematische Schnittansicht einer ersten erfindungsgemäßen Ausführungsform eines ersten Verbindungsteils;
- **Figur 4**: eine schematische Schnittansicht einer ersten erfindungsgemäßen Ausführungsform eines zweiten Verbindungsteils;
- **Figur 5**: eine schematische Schnittansicht einer zweiten erfindungsgemäßen Ausführungsform eines Modulverbinders im nicht-verbundenen Zustand;
- **Figur 6**: eine schematische Schnittansicht einer zweiten erfindungsgemäßen Ausführungsform eines Modulverbinders im verbundenen Zustand;
- **Figur 7**: eine schematische Schnittansicht eines zweiten erfindungsgemäßen Ausführungsform eines ersten Verbindungsteils;
- **Figur 8**: eine Außenansicht eines weiteren Beispiels eines Modulverbinders im verbundenen Zustand;
- **Figur 9**: eine schematische Schnittansicht eines weiteren Beispiels eines zweiten Verbindungsteils;
- **Figur 10**: eine schematische Schnittansicht eines weiteren Beispiels eines Modulverbinders im nicht-verbundenen Zustand;
- **Figur 11**: eine schematische Schnittansicht eines weiteren Beispiels eines Modulverbinders im verbundenen Zustand;
- **Figur 12**: eine schematische Schnittansicht eines weiteren Beispiels eines Modulverbinders im nicht-verbundenen Zustand;
- **Figur 13**: eine schematische Schnittansicht eines weiteren Beispiels eines Modulverbinders im verbundenen Zustand;

### Detaillierte Beschreibung von Ausführungsformen

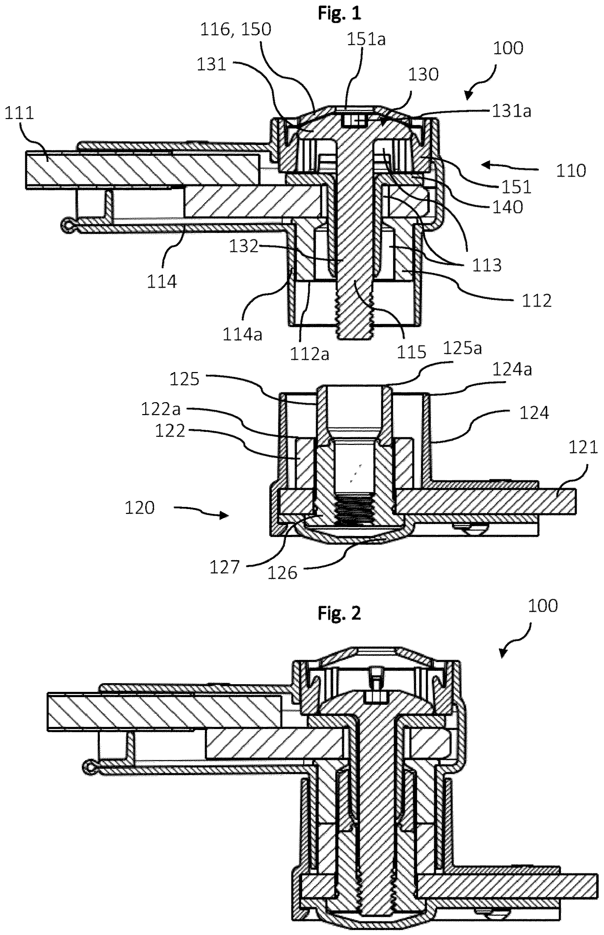

Figur 1 zeigt eine schematische Schnittansicht einer ersten erfindungsgemäßen Ausführungsform eines Modulverbinders 100 im nicht-verbundenen Zustand. Der Modulverbinder 100 weist zwei Verbindungsteile 110, 120 auf, die elektrisch leitend und mechanisch miteinander verbunden werden können. Das erste Verbindungsteil 110 weist ein erstes Leiterelement 111 und ein erstes Kontaktelement 112 auf. Das erste Kontaktelement 112 hat eine Hülsenform mit einer zylinderförmigen Aussparung. Das zweite Verbindungsteil 120 weist ein zweites Leiterelement 121 auf. Die beiden Leiterelemente 111, 121 können dabei jeweils als Stromschienen ausgebildet sein. Die beiden Leiterelemente 111, 121 sind aus einem elektrisch leitfähigen Material bereitgestellt. Beispielsweise können die beiden Leiterelemente 111, 121 aus Kupfer oder Aluminium bereitgestellt sein, sind darauf aber nicht beschränkt. Die beiden Leiterelemente 111, 121 können aus demselben oder einem unterschiedlichen elektrisch leitfähigen Material bereitgestellt sein. Das erste Leiterelement 111 weist eine Schnittstelle, insbesondere ein Durchgangsloch oder ein Langloch, auf, durch welche das Befestigungselement 130 geführt ist. Durch ein Langloch kann ein Toleranzausgleich bei der Montage bzw. bei dem Verbinden der Beiden Verbindungsteile 110, 120 bereitgestellt werden. Das zweite Leiterelement 121 weist ebenfalls eine Schnittstelle, insbesondere ein Durchgangsloch, auf, in welcher ein Gegenelement 127 zu dem Befestigungselement 130 angeordnet ist. Hierbei kann die Schnittstelle bzw. das Durchgangsloch einen Durchmesser aufweisen, welcher im Wesentlichen dem des Gegenelements 127 entspricht, sodass das Gegenelement 127 in Berührkontakt mit der Schnittstelle, insbesondere dem Durchgangsloch, insbesondere mit der gesamten Schnittstelle, ist. Das Gegenelement 127 kann aus demselben oder einem unterschiedlichen Material wie das zweite Leiterelement 121 ausgebildet sein. Damit kann eine geeignete und zuverlässige mechanische Verbindung zwischen dem ersten Verbindungsteil 110 und dem zweiten Verbindungsteil 120 bereitgestellt werden.

Das erste Leiterelement 111 ist zumindest teilweise oder abschnittsweise elektrisch isoliert durch ein dieses umgebendes erstes äußeres Berührschutzelement 114. Das erste äußere Berührschutzelement 114 kann einteilig oder mehrteilig ausgebildet sein und besteht bzw. ist bereitgestellt aus einem elektrisch isolierenden Material, insbesondere einem elektrisch isolierenden Kunststoff. Das erste äußere Berührschutzelement 114 weist eine Aussparung auf, in welcher ein Halteelement 151 des Befestigungselements 130 angeordnet ist. Das Halteelement 151 des Befestigungselements 130 bildet zusammen mit einem Abdeckelement 150 des Befestigungselements 130 ein erstes weiteres Berührschutzelement 116 aus. Das Abdeckelement 150 und das Halteelement 151 bilden hierbei gemeinsam ein einteiliges Element aus. Das Abdeckelement 150 weist eine Durchgangsöffnung 151a auf, durch welche ein Werkzeug das Befestigungselement 130 erreichen kann. Das einteilige Element bestehend aus dem Abdeckelement 150 und dem Halteelement 151 kann hierbei drehbar um eine Rotationsachse des Befestigungselements 130 eingerichtet sein, um eine Betätigung des Befestigungselements 130 zu erleichtern. Das Abdeckelement 150 bzw. das erste weitere Berührschutzelement 116 hat hierbei die Funktion, die strom- und spannungsführenden Teile im Inneren des Modulverbinders 100 durch eine direkte Berührung von außen abzuschirmen bzw. zu trennen. Das Abdeckelement 150 bzw. das erste weitere Berührschutzelement 116 hat zusätzlich die Funktion, dass mittels der Durchgangsöffnung 151a des Abdeckelements 150 des ersten Verbindungsteils 110 des Modulverbinders 100 das Befestigungselement 130, zum Beispiel mit Hilfe eines hier nicht dargestellten Werkzeugs, angetrieben werden kann, um das Befestigungselement 130 von einer Parkposition in eine entsprechende Endposition zu bringen, sodass eine elektrisch leitende Verbindung zwischen den beiden Leiterelementen 111, 121 der Verbindungsteile 110, 120 des Modulverbinders herstellbar ist. Das Befestigungselement 130 wird in der Parkposition von dem Halteelement 151 gehalten.

Die beiden Verbindungsteile 110, 120 können über ein gemeinsames Befestigungselement 130 miteinander verbunden werden. Der erste Verbindungsteil 110 und der zweite Verbindungsteil 120 sind dabei derart ausgebildet, dass diese ineinandergreifen, d.h. dass diese beiden Teile 110, 120 ineinandergeschoben werden können. Hierbei kann im Detail das erste Verbindungsteil 110 in das zweite Verbindungsteil 120 eingeschoben werden, sodass ein Verrutschen der beiden Verbindungsteile 110, 120 zuverlässig unterbunden werden kann. Das Befestigungselement 130 ist in der dargestellten erfindungsgemäßen Ausführungsform als eine Schraube oder ein Bolzen aus Metall ausgebildet. Das Befestigungselement 130 weist einen Kopfabschnitt 131 und einen Körperabschnitt 132 auf. Das Befestigungselement 130 ist dabei als ein strom- oder spannungsführendes Teil des Modulverbinders 100 anzusehen, welches es vor einem direkten Berühren abzuschirmen gilt. Diese Funktion übernimmt ein in einem Zwischenraum 113 angeordnetes Trennelement 140, wie es nachfolgend im Detail noch näher erläutert wird.

Die Fig. 1 zeigt, dass der Zwischenraum 113 zwischen dem Befestigungselement 130 und dem ersten Kontaktelement 112 sowie dem ersten Leiterelement 111 derart bereitgestellt, dass sowohl der Kopfabschnitt 131 als auch der Körperabschnitt 132 des Befestigungselements 130 nicht mit den spannungsführenden Elementen 112 und 111 in Berührung, insbesondere in direkter Berührung, und/oder in elektrische Verbindung stehen. Der Zwischenraum 113 wird bereitgestellt, indem die Schnittstelle, insbesondere das Durchgangsloch oder Langloch, des ersten Leiterelement 111 und die zylinderförmige Aussparung des ersten Kontaktelements 112 jeweils einen größeren Durchmesser als das Befestigungselement 130, insbesondere der Körperabschnitt 132, aufweisen. Der Durchmesser der Schnittstelle und der Durchmesser der zylinderförmigen Aussparung des ersten Kontaktelement 113 können hierbei identisch oder verschieden sein. Hierbei sind die Durchmesser des Befestigungselements 130, insbesondere des Körperabschnitts, der Schnittstelle und der zylinderförmigen Aussparung derart ausgebildet, dass das Befestigungselement 130, insbesondere der Körperabschnitt 132, zu der Schnittstelle und dem ersten Kontaktelement beabstandet ist. Hinzukommend ist das Trennelemente 140 hierbei zwischen dem Befestigungselement 130, dem ersten Leiterelement 111 und dem ersten Kontaktelement 112 angeordnet, wodurch eine geeignete elektrische Isolierung des Befestigungselements bereitgestellt wird. Das Befestigungselement 130 verläuft über eine Durchtrittsöffnung in dem Trennelement 140 hindurch bzw. es wird von dem Trennelement 140 geführt. Das Trennelement 140 ist aus einem faserverstärkten Kunststoff, insbesondere einem glasfaserverstärkten Duroplast, bereitgestellt. Das verwendete Material hat hierbei den Vorteil, dass dieses einerseits sehr stabil ist und starke Kräfte kompensieren, welche beim Verschrauben der beiden Verbindungsteile 110, 120 auftreten können, kann und andererseits elektrisch isolierende ist. Das Trennelement 140 ist hierbei als Hülse ausgebildet, welche zwei Teile aufweist. Der erste Teil erstreckt sich parallel zum Körperabschnitt 132 des Befestigungselements 130. Der zweite Teil erstreckt sich senkrecht zum Körperabschnitt 132 des Befestigungselements 130. Der erste Teil des Trennelements 140 stellt hierbei eine elektrische Isolierung des Körperabschnitts 132 des Befestigungselements 130 von dem Leiterelement 111 und dem ersten Kontaktelement 112 bereit und der zweite Teil stellt eine elektrische Isolierung des Kopfabschnitts 131 des Befestigungselements 130 von dem Leiterelement 111 bereit.

Wie oben bereits beschrieben wird das Befestigungselement 130 mittels des Halteelements 151 in der Parkposition gehalten bzw. angeordnet. Hierbei ist der Kopfabschnitt 131 des Befestigungselements 130 in Berührkontakt mit dem Abdeckelement 150. Mit anderen Worten ausgedrückt, presst das Halteelement 151 den Kopfabschnitt 131 des Befestigungselements 130 an das Abdeckelement 150. Das Halteelement 151 und/oder das Abdeckelement 150 sind aus Kunststoff bereitgestellt. Demzufolge ist das Befestigungselement 130 in der Parkposition lediglich mit nicht elektrisch leitenden Elementen in Kontakt, insbesondere in direktem Kontakt bzw. Berührkontakt. Somit kann eine ungewollte Bewegung des Befestigungselements 130, wenn dieses in der Parkposition ist, unterbunden werden. Eine ungewollte elektrische Kontaktierung des Befestigungselements 130 mit dem ersten Leiterelement 111 und/oder dem ersten Kontaktelement 112 ist somit und durch das Trennelement 140 zuverlässig unterbunden. Ferner kann auf diese Weise das Befestigungselement 130 einen Berührschutz innerhalb des ersten Verbindungsteils 110 darstellen, obwohl das Befestigungselement 130 aus z.B. Metall besteht. Mit anderen Worten ausgedrückt stellt das Befestigungselement 130 somit ein erstes inneres Berührschutzelement 115 des ersten Verbindungsteils 110 dar. Das Halteelement 150 kann dabei mehrere Halteelemente mit Schnappfunktion aufweisen.

Das erste äußere Berührschutzelement 114 weist eine äußere, elektrisch isolierende Schutzmanschette 114a auf. Die Schutzmanschette 114a umgibt zumindest teilweise das erste Kontaktelement 112 und das Befestigungselement 130. Die Schutzmanschette 114a ist direkt an einer ersten Oberfläche des ersten Kontaktelements 112 angeordnet, wobei die erste Oberfläche des ersten Kontaktelement 112 gegenüberliegend zu einer zweiten Oberfläche des ersten Kontaktelements 112, welche dem Befestigungselements 130 zugewandt ist, ist. Die elektrisch isolierende Schutzmanschette 114a erstreckt sich bzw. bedeckt zumindest teilweise oder vollständig die erste Oberfläche des Kontaktelements 112. Insbesondere überragt die elektrisch isolierende Schutzmanschette 114a die erste Oberfläche des ersten Kontaktelements 112. Hierbei ist die elektrisch isolierende Schutzmanschette 114a jedoch derart ausgebildet, dass die Kontaktfläche 112a des Kontaktelements 112 nicht bedeckt bzw. frei liegend ist. Demzufolge ragt die Kontaktfläche 112a des Kontaktelements 112 nicht über die elektrisch isolierende Schutzmanschette 114a hinaus. Mit anderen Worten ausgedrückt, überragt die Kontaktfläche 112a des Kontaktelements 112 nicht die elektrisch isolierende Schutzmanschette 114a.

Das Befestigungselement 130 ist von einer Parkposition, in der keine elektrisch leitende Verbindung zwischen den beiden Leiterelementen 111, 121 der beiden Verbindungsteile 110, 120 des Modulverbinders 100 besteht, in eine Endposition bewegbar. In der Endposition ist das Befestigungselement 130 mit einer Mutter oder einer Einpressmutter fixiert. Die Mutter bzw. die Einpressmutter wird dabei von dem als eine Gewindebuchse ausgebildeten Gegenelement 127 gebildet, mit dem der Körperabschnitt 132 des Befestigungselements 130 in der Endposition des Befestigungselements 130 fixiert wird. Die Fixierung kann dabei als eine Verschraubung, Verrastung, Verclipsung oder Einpressung oder allgemein gesprochen, als eine beliebige ausgebildete form- oder kraftschlüssige Verbindung zwischen dem Befestigungselement 130 und dem Gegenelement 127 ausgebildet sein.

Bei dem Lösen des Befestigungselements 130 wird das Befestigungselement 130 von seiner Endposition in eine Parkposition gebracht. Dies wird durch das Halteelement 151 bereitgestellt. Dabei wird das Befestigungselement 130 aus dem als eine Gewindebuchse ausgebildeten Gegenelement 127 herausgedreht, wenn das Befestigungselement 130 als Schraube ausgebildet ist.

In der Parkposition - wie dies in der Fig. 1 dargestellt ist - des Befestigungselements 130 liegen die Kontaktfläche 112a des ersten Kontaktelements 112 und die Kontaktfläche 121a des zweiten Leiterelements 121 nicht aufeinander, sodass in diesem ersten Zustand keine elektrisch leitende Verbindung zwischen dem ersten Leiterelement 111 des ersten Verbindungsteils 110 und dem zweiten Leiterelement 121 des zweiten Verbindungsteils 120 besteht.

In der Fig. 1 ist weiter dargestellt, dass das zweite Verbindungsteil 120 ein zweites, äußeres Berührschutzelement 124, ein zweites, inneres Berührschutzelement 125 und ein zweites weiteres Berührschutzelement 126 aufweist. Das zweite, innere Berührschutzelement 125 ist als eine isolierende Distanzbuchse bzw. als isolierende Schutzmanschette ausgebildet.

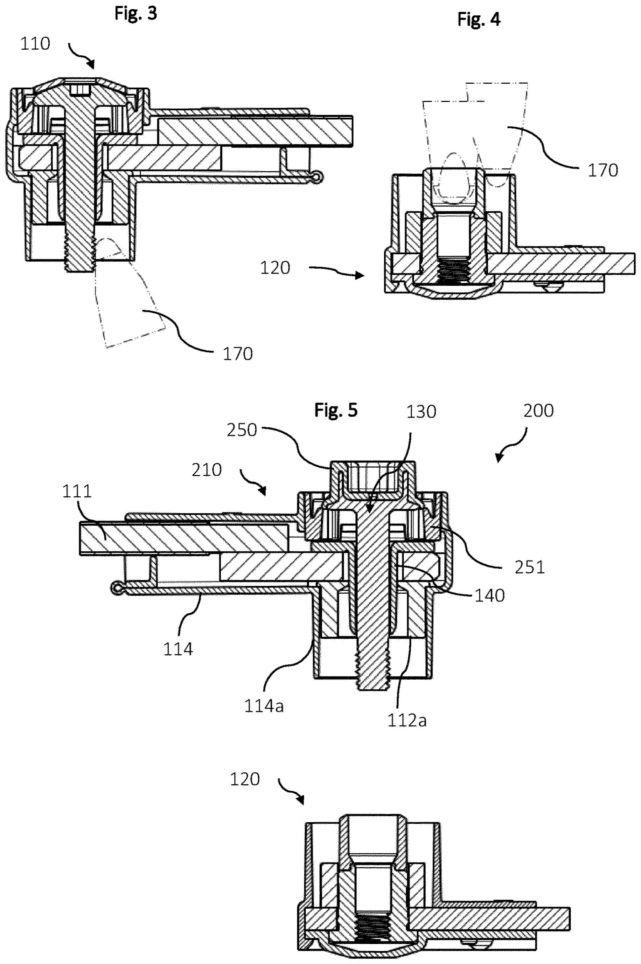

In der Fig. 1 ist zu sehen, dass das zweite, innere Berührschutzelement 125 des zweiten Verbindungsteils 120 ausgebildet, in einem Zwischenraum zwischen dem zweiten, äußeren Berührschutzelement 124 des zweiten Verbindungsteils 120 und dem Befestigungselement 130 angeordnet ist. Das zweite, innere Berührschutzelement 125 erstreckt sich dabei aus einer Öffnung, welche durch das zweite, äußere Berührschutzelement 124 bereitgestellt wird, hinaus. Mit anderen Worten ausgedrückt steht das zweite, innere Berührschutzelement 125 hervor in Bezug auf das zweite, äußere Berührschutzelement 124 oder das zweite, innere Berührschutzelement 125 überragt das zweite, äußere Berührschutzelement 124. Somit kann ein geeigneter Berührschutz bereitgestellt werden. Demzufolge kann ein Prüffinger 170, wie in Figur 3 dargestellt, nicht stromführende Elemente des ersten Verbindungsteils 110 erreichen, was zu einem gewünschten vollständigen Berührschutz führt.

Die zuvor genannten Berührschutzelemente 124, 125, 126 des zweiten Verbindungsteils 120 bestehen aus einem elektrisch isolierenden Material und verhindern ein ungewolltes Berühren von strom- und spannungsführenden Teilen des zweiten Verbindungsteils 120. Dies wird auch anschaulich in der Fig. 4 durch die genormten Prüffinger 170 dargestellt, die aufgrund der zuvor genannten Berührschutzelemente strom- und spannungsführende Teile des zweiten Verbindungsteils 120 des Modulverbinders 100 nicht berühren können.

Das erste Verbindungsteil 110 und das zweite Verbindungsteil 120 sind dabei derart ausgebildet, dass diese ineinandergreifen, d.h. dass diese beiden Teile 110, 120 ineinandergeschoben werden können. Hierbei kann im Detail das erste Verbindungsteil 110 in das zweite Verbindungsteil 120 eingeschoben werden, sodass ein Verrutschen der beiden Verbindungsteile zuverlässig unterbunden werden kann.

Die erste erfindungsgemäße Ausführungsform des Modulverwenders 100 ist somit im nicht verbundenen Zustand vollständig berührgeschützt. Das zweite Verbindungselement 120 ist berührgeschützt ausgebildet, da ein genormten Prüffinger 170 nicht mit dem ersten Leiterelement in Berührung kommt (siehe Figur 4). Das erste Verbindungselement 110 ist ebenfalls vollständig berührgeschützt ausgebildet, da ein genormte Prüffinger 170 das erste Kontaktelement 112 berühren kann.

Figur 2 zeigt eine schematische Schnittansicht einer ersten erfindungsgemäßen Ausführungsform eines Modulverbinders 100 im verbundenen Zustand bzw. in einem zweiten Betriebszustand. In dem verbundenen Zustand ist das Befestigungselements 130 in der Endposition des Befestigungselements 130 angeordnet und die Kontaktfläche 112a des ersten Kontaktelements 112 und die Kontaktfläche 122a des zweiten Kontaktelements 122 sind in direktem Kontakt zum Bereitstellen einer elektrischen Verbindung zwischen dem ersten Verbindungsteil 110 und dem zweiten Verbindungsteil 120.

In der Endposition ist das Befestigungselement 130, d. h. eine Schraube, in einer Gewindebuchse, welche das Gegenelement 127 ausbildet, mit dem der Körperabschnitt 131 des Befestigungselements 130 in der Endposition des Befestigungselements 130 fixiert wird, angeordnet. Die Fixierung ist hierbei eine Verschraubung und bildet eine form- oder kraftschlüssige Verbindung zwischen dem Befestigungselement 130 und dem Gegenelement 127 aus. In der Endposition des Befestigungselements 130 ist das Befestigungselement 130, insbesondere der Körperabschnitt 132, des Befestigungselements 130 derart tief in das Gegenelement 127 ein gedreht, dass der Kopfabschnitt 131 des Befestigungselements 130 benachbart oder direkt anliegend an dem ersten Leiterelement 111 ist. Somit kann eine geeignete und zuverlässige Befestigung des ersten Verbindungsteils 110 bzw. des ersten weiter Elements 111 und des zweiten Verbindungsteils 120 bzw. zweiten Leiterelements 121 bereitgestellt werden.

Ferner sind, wenn das Befestigungselements 130 in der Endposition ist, bzw. der Modulverbinder 100 in dem verbundenen Zustand ist, die Kontaktfläche 112a des ersten Kontaktelements 112 und die Kontaktfläche 122a des zweiten Kontaktelements 122 des zweiten Leiterelements 121 direkt aufeinander, sodass in diesem zweiten Zustand eine elektrisch leitende Verbindung zwischen dem ersten Leiterelement 111 des ersten Verbindungsteils 110 und dem zweiten Leiterelement 121 des zweiten Verbindungsteils 120 besteht. Die Kontaktflächen 112a und 122a sollten hierbei eine möglichst große Oberfläche aufweisen, um einen Übergangswiderstand zwischen den beiden Kontaktflächen 112a und 122a möglichst klein zu halten.

Durch das Ineinandergreifen des vor Berührung geschützten zweiten Verbindungsteils 120 und des vollständig vor Berührung geschützten ersten Verbindungsteils 110 wird im verbundenen Zustand ein vollständig berührgeschützter Modulverbinder 100 bereitgestellt, da lediglich vollständig berührgeschütze Teile des Modulverbinders von einem Benutzer berührbar sind (siehe Figur 2).

Figur 3 zeigt eine schematische Schnittansicht einer ersten erfindungsgemäßen Ausführungsform eines ersten Verbindungsteils 110. In der Figur 3 ist gezeigt, dass das erste Verbindungsteil 110 berührgeschützt ausgebildet ist, da keines der stromführenden Elemente des ersten Verbindungsteils 110 von einem Prüffinger 170 erreicht werden kann.

Figur 4 zeigt eine schematische Schnittansicht einer ersten erfindungsgemäßen Ausführungsform eines zweiten Verbindungsteils 120. In der Figur 4 ist gezeigt, dass das zweite Verbindungsteil 120 berührgeschützt ausgebildet ist, da keines der stromführenden Elemente des zweiten Verbindungsteils 120 von einem Prüffinger 170 erreicht werden kann.

Figur 5 zeigt eine schematische Schnittansicht einer zweiten erfindungsgemäßen Ausführungsform eines Modulverbinders 200 im nicht-verbundenen Zustand. Der Modulverbinder 200 unterscheidet sich von der ersten erfindungsgemäßen Ausführungsform des Modulverbindung 100 aus den Figuren 1 bis 4 darin, dass das Halteelement 251 und das Abdeckelement 250 nicht einteilig, d. h. als zwei separate Teile, ausgebildet sind. Das Halteelement 251 hält das Befestigungselement 130 in der Parkposition. Das Abdeckelement 250 ist als eine elektrisch isolierende Umhüllung des Kopfabschnitts 131 des Befestigungselements 130 ausgebildet. Mit anderen Worten ausgedrückt unterscheidet sich die zweite erfindungsgemäßen Ausführungsform des Modulverbinders 200 von der ersten erfindungsgemäßen Ausführungsform des Modulverbinders 100 dadurch, dass lediglich der erste Verbindungsteil 210 verschieden ist. Hierbei sind beide Verbindungsteile jeweils berührgeschützt ausgebildet.

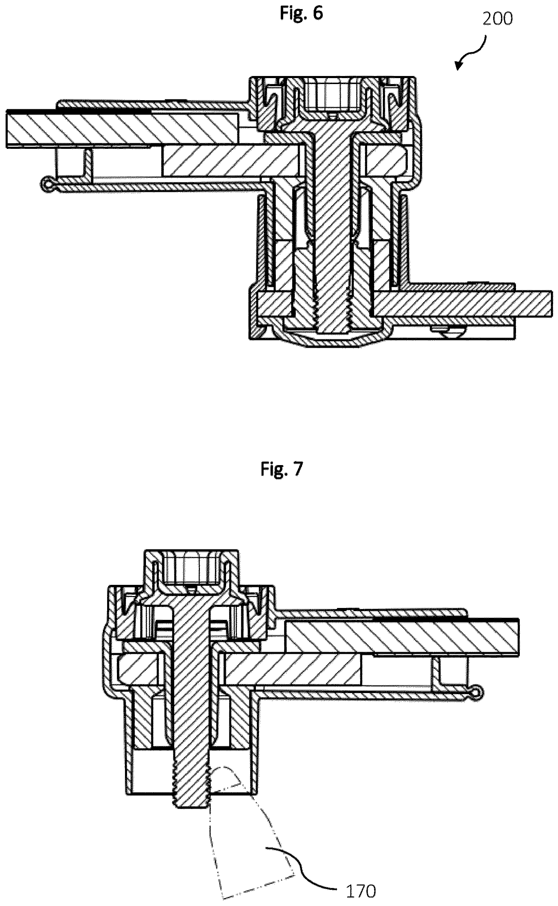

Figur 6 zeigt eine schematische Schnittansicht einer zweiten erfindungsgemäßen Ausführungsform eines Modulverbinders 200 im verbundenen Zustand. In diesem Zustand sind der erste Verbindungsteil 210 und der zweite Verbindungsteil 120 über das Befestigungselement miteinander mechanisch verbunden. Hinzukommend ist durch die direkte Kontaktierung des ersten Kontaktelements 121 mit dem zweiten Kontaktelement 122 eine elektrische Kontaktierung des ersten Verbindungsteils 210 und des zweiten Verbindungsteils 120 bereitgestellt.

Figur 7 zeigt eine schematische Schnittansicht einer zweiten erfindungsgemäßen Ausführungsform eines ersten Verbindungsteils 210. Der Figur 7 kann entnommen werden, dass auch die zweite erfindungsgemäßen Ausführungsform des ersten Verbindungsteils 210 vollständig berührgeschützt ist, da ein Prüfling der 170 keines der stromführenden Elemente berühren kann.

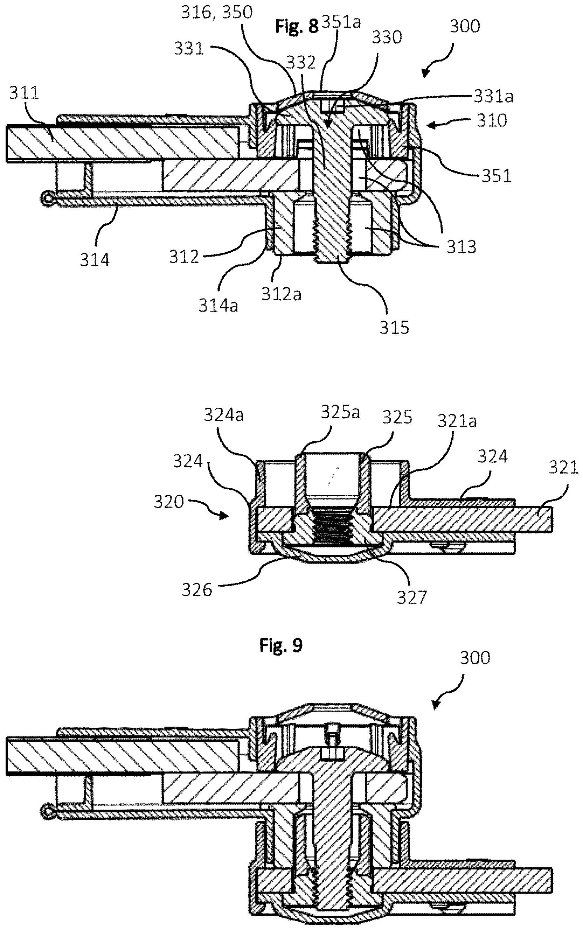

Figur 8 zeigt eine schematische Schnittansicht eines weiteren Beispiels eines Modulverbinders 300 im nicht-verbundenen Zustand. Der Modulverbinder 300 weist zwei Verbindungsteile 310, 320 auf, die elektrisch leitend und mechanisch miteinander verbunden werden können. Das erste Verbindungsteil 310 weist ein erstes Leiterelement 311 und ein erstes Kontaktelement 312 auf. Das erste Kontaktelement 312 hat eine Hülsenform mit einer zylinderförmigen Aussparung.

Das zweite Verbindungsteil 320 weist ein zweites Leiterelement 321 auf. Die beiden Leiterelemente 311, 321 können dabei jeweils als Stromschienen ausgebildet sein.

Die beiden Leiterelemente 311, 321 sind aus einem elektrisch leitfähigen Material bereitgestellt. Beispielsweise können die beiden Leiterelemente 311, 321 aus Kupfer oder Aluminium bereitgestellt sein, sind darauf aber nicht beschränkt. Die beiden Leiterelemente 311, 321 können aus demselben oder einem unterschiedlichen elektrisch leitfähigen Material bereitgestellt sein. Das erste Leiterelement 311 weist eine Schnittstelle, insbesondere ein Durchgangsloch oder ein Langloch, auf, durch welche das Befestigungselement 330 geführt ist. Durch ein Langloch kann ein Toleranzausgleich bei der Montage bzw. bei dem Verbinden der Beiden Verbindungsteile 310, 320 bereitgestellt werden. Das zweite Leiterelement 321 weist ebenfalls eine Schnittstelle, insbesondere ein Durchgangsloch, auf, in welcher ein Gegenelement 327 zu dem Befestigungselement 330 angeordnet ist.

Hierbei kann die Schnittstelle bzw. das Durchgangsloch einen Durchmesser aufweisen, welcher im Wesentlichen dem des Gegenelements 327 entspricht, sodass das Gegenelement 327 in Berührkontakt mit der Schnittstelle, insbesondere dem Durchgangsloch, insbesondere mit der gesamten Schnittstelle, ist. Das Gegenelement 327 kann aus demselben oder einem unterschiedlichen Material wie das zweite Leiterelement 321 ausgebildet sein. Damit kann eine geeignete und zuverlässige mechanische Verbindung zwischen dem ersten Verbindungsteil 310 und dem zweiten Verbindungsteil 320 bereitgestellt werden.

Das erste Leiterelement 311 ist zumindest teilweise oder abschnittsweise elektrisch isoliert durch ein dieses umgebendes erstes äußeres Berührschutzelement 314. Das erste äußere Berührschutzelement 314 kann einteilig oder mehrteilig ausgebildet sein und besteht bzw. ist bereitgestellt aus einem elektrisch isolierenden Material, insbesondere einem elektrisch isolierenden Kunststoff. Das erste äußere Berührschutzelement 314 weist eine Aussparung 314b auf, in welcher ein Halteelement 351 des Befestigungselements 330 angeordnet ist. Das Halteelement 351 des Befestigungselements 330 bildet zusammen mit einem Abdeckelement 350 des Befestigungselements 330 ein erstes weiteres Berührschutzelement 316 aus. Das Abdeckelement 350 und das Halteelement 351 bilden hierbei gemeinsam ein einteiliges Element aus. Das Abdeckelement 350 weist eine Durchgangsöffnung 351a auf, durch welche ein Werkzeug das Befestigungselement 330 erreichen kann. Das einteilige Element bestehend aus dem Abdeckelement 350 und dem Halteelement 351 kann hierbei drehbar um eine Rotationsachse des Befestigungselements 330 eingerichtet sein, um eine Betätigung des Befestigungselements 330 zu erleichtern. Das Abdeckelement 350 bzw. das erste weitere Berührschutzelement 316 hat hierbei die Funktion, die strom- und spannungsführenden Teile im Inneren des Modulverbinders 300 durch eine direkte Berührung von außen abzuschirmen bzw. zu trennen. Das Abdeckelement 350 bzw. das erste weitere Berührschutzelement 316 hat zusätzlich die Funktion, dass mittels der Durchgangsöffnung 351a des Abdeckelements 350 des ersten Verbindungsteils 310 des Modulverbinders 300 das Befestigungselement 330, zum Beispiel mit Hilfe eines hier nicht dargestellten Werkzeugs, angetrieben werden kann, um das Befestigungselement 330 von einer Parkposition in eine entsprechende Endposition zu bringen, sodass eine elektrisch leitende Verbindung zwischen den beiden Leiterelementen 311, 321 der Verbindungsteile 310, 320 des Modulverbinders herstellbar ist. Das Befestigungselement 330 wird in der Parkposition von dem Halteelement 351 gehalten.

Die beiden Verbindungsteile 310, 320 können über ein gemeinsames Befestigungselement 330 miteinander verbunden werden. Der erste Verbindungsteil 310 und der zweite Verbindungsteil 320 sind dabei derart ausgebildet, dass diese ineinandergreifen, d.h. dass diese beiden Teile 310, 320 ineinandergeschoben werden können. Hierbei kann im Detail das erste Verbindungsteil 310 in das zweite Verbindungsteil 320 eingeschoben werden, sodass ein Verrutschen der beiden Verbindungsteile 310, 320 zuverlässig unterbunden werden kann. Das Befestigungselement 330 ist in dem Beispiel als eine Schraube oder ein Bolzen aus Metall ausgebildet. Das Befestigungselement 330 weist einen Kopfabschnitt 331 und einen Körperabschnitt 332 auf. Das Befestigungselement 330 ist dabei als ein strom- oder spannungsführendes Teil des Modulverbinders 300 anzusehen, welches es vor einem direkten Berühren abzuschirmen gilt. Diese Funktion übernimmt alleine ein Zwischenraum 313, wie es nachfolgend im Detail noch näher erläutert wird.

Die Fig. 8 zeigt, dass der Zwischenraum 313 alleine für die elektrische Isolierung des Befestigungselements 330 sorgt. Der Zwischenraum 313 ist hierbei zwischen dem Befestigungselement 330 und dem ersten Kontaktelement 312 sowie dem ersten Leiterelement 311 derart bereitgestellt, dass sowohl der Kopfabschnitt 331 als auch der Körperabschnitt 332 des Befestigungselements 330 nicht mit den spannungsführenden Elementen 312 und 311 in Berührung, insbesondere in direkter Berührung, und/oder in elektrische Verbindung stehen. Der Zwischenraum 313 wird bereitgestellt, indem die Schnittstelle, insbesondere das Durchgangsloch oder Langloch, des ersten Leiterelement 311 und die zylinderförmige Aussparung des ersten Kontaktelements 312 jeweils einen größeren Durchmesser als das Befestigungselement 330, insbesondere der Körperabschnitt 332, aufweisen. Der Durchmesser der Schnittstelle und der Durchmesser der zylinderförmigen Aussparung des ersten Kontaktelement 313 können hierbei identisch oder verschieden sein. Hierbei sind die Durchmesser des Befestigungselements 330, insbesondere des Körperabschnitts, der Schnittstelle und der zylinderförmigen Aussparung derart ausgebildet, dass das Befestigungselement 330, insbesondere der Körperabschnitt 332, zu der Schnittstelle und dem ersten Kontaktelement beabstandet ist. Alleine bedeutet an dieser Stelle, dass der Zwischenraum frei von jeglichen Elementen, insbesondere mechanischen Elementen und Mitteln, ist. Der Zwischenraum 313 ist, wenn die beiden Verbindungsteile 310, 320 nicht miteinander verbunden sind, hierbei durch das Anordnen des Befestigungselements 330 in der Parkposition bereitgestellt.

Wie oben bereits beschrieben wird das Befestigungselement 330 mittels des Halteelements 351 in der Parkposition gehalten bzw. angeordnet. Hierbei ist der Kopfabschnitt 331 des Befestigungselements 330 in Berührkontakt mit dem Abdeckelement 350. Mit anderen Worten ausgedrückt, presst das Halteelement 351 den Kopfabschnitt 331 des Befestigungselements 330 an das Abdeckelement 350. Das Halteelement 351 und/oder das Abdeckelement 350 sind aus Kunststoff bereitgestellt. Demzufolge ist das Befestigungselement 330 in der Parkposition lediglich mit nicht elektrisch leitenden Elementen in Kontakt, insbesondere in direktem Kontakt bzw. Berührkontakt. Somit kann eine ungewollte Bewegung des Befestigungselements 330, wenn dieses in der Parkposition ist, unterbunden werden und eine ungewollte elektrische Kontaktierung des Befestigungselements 330 mit dem ersten Leiterelement 311 und/oder dem ersten Kontaktelement 312 zuverlässig unterbunden werden. Ferner kann auf diese Weise das Befestigungselement 330 einen Berührschutz innerhalb des ersten Verbindungsteils 310 darstellen, obwohl das Befestigungselement 330 aus z.B. Metall besteht. Mit anderen Worten ausgedrückt stellt das Befestigungselement 330 somit ein erstes inneres Berührschutzelement 315 des ersten Verbindungsteils 310 dar. Das Halteelement 315 kann dabei mehrere Halteelemente mit Schnappfunktion aufweisen.

Das erste äußere Berührschutzelement 314 weist eine äußere, elektrisch isolierende Schutzmanschette 314a auf. Die Schutzmanschette 314a umgibt zumindest teilweise das erste Kontaktelement 312 und das Befestigungselement 330. Die Schutzmanschette 314a ist direkt an einer ersten Oberfläche des ersten Kontaktelements 312 angeordnet, wobei die erste Oberfläche des ersten Kontaktelement 312 gegenüberliegend zu einer zweiten Oberfläche des ersten Kontaktelements 312, welche dem Befestigungselements 330 zugewandt ist, ist. Die elektrisch isolierende Schutzmanschette 314a erstreckt sich bzw. bedeckt zumindest teilweise oder vollständig die erste Oberfläche des Kontaktelements 312. Demzufolge überragt die elektrisch isolierende Schutzmanschette 314a nicht die erste Oberfläche des ersten Kontaktelements 312. Hierbei ist die elektrisch isolierende Schutzmanschette 314a jedoch derart ausgebildet, dass die Kontaktfläche 312a des Kontaktelements 312 nicht bedeckt bzw. frei liegend ist. Demzufolge ragt die Kontaktfläche 312a des Kontaktelements 312 über die elektrisch isolierende Schutzmanschette 314a hinaus. Mit anderen Worten ausgedrückt, überragt die die Kontaktfläche 312a des Kontaktelements 312 die elektrisch isolierende Schutzmanschette 314a.

Das Befestigungselement 330 ist von einer Parkposition, in der keine elektrisch leitende Verbindung zwischen den beiden Leiterelementen 311, 321 der beiden Verbindungsteile 310, 320 des Modulverbinders 300 besteht, in eine Endposition bewegbar. In der Endposition ist das Befestigungselement 330 mit einer Mutter oder einer Einpressmutter fixiert. Die Mutter bzw. die Einpressmutter wird dabei von dem als eine Gewindebuchse ausgebildeten Gegenelement 327 gebildet, mit dem der Körperabschnitt 332 des Befestigungselements 330 in der Endposition des Befestigungselements 330 fixiert wird. Die Fixierung kann dabei als eine Verschraubung, Verrastung, Verclipsung oder Einpressung oder allgemein gesprochen, als eine beliebige ausgebildete form- oder kraftschlüssige Verbindung zwischen dem Befestigungselement 130 und dem Gegenelement 127 ausgebildet sein.

Bei dem Lösen des Befestigungselements 330 wird das Befestigungselement 330 von seiner Endposition in eine Parkposition gebracht. Dies wird durch das Halteelement 351 bereitgestellt. Dabei wird das Befestigungselement 330 aus dem als eine Gewindebuchse ausgebildeten Gegenelement 327 herausgedreht, wenn das Befestigungselement 330 als Schraube ausgebildet ist.

In der Parkposition - wie dies in der Fig. 8 dargestellt ist - des Befestigungselements 330 liegen die Kontaktfläche 312a des ersten Kontaktelements 312 und die Kontaktfläche 321a des zweiten Leiterelements 321 nicht aufeinander, sodass in diesem ersten Zustand keine elektrisch leitende Verbindung zwischen dem ersten Leiterelement 311 des ersten Verbindungsteils 310 und dem zweiten Leiterelement 321 des zweiten Verbindungsteils 320 besteht.

In der Fig. 8 ist weiter dargestellt, dass das zweite Verbindungsteil 320 ein zweites, äußeres Berührschutzelement 324, ein zweites, inneres Berührschutzelement 325 und ein zweites weiteres Berührschutzelement 326 aufweist. Das zweite, innere Berührschutzelement 325 ist als eine isolierende Distanzbuchse bzw. als isolierende Schutzmanschette ausgebildet.

In der Fig. 8 ist zu sehen, dass das zweite, innere Berührschutzelement 325 des zweiten Verbindungsteils 320 ausgebildet, in einem Zwischenraum zwischen dem zweiten, äußeren Berührschutzelement 324 des zweiten Verbindungsteils 320 und dem Befestigungselement 330 ist. Das zweite, innere Berührschutzelement 325 erstreckt sich dabei aus einer Öffnung, welche durch das zweite, äußere Berührschutzelement 324 bereitgestellt wird, hinaus. Mit anderen Worten ausgedrückt steht das zweite, innere Berührschutzelement 325 hervor in Bezug auf das zweite, äußere Berührschutzelement 324 oder das zweite, innere Berührschutzelement 325 überragt das zweite, äußere Berührschutzelement 324. Somit kann ein geeigneter Berührschutz bereitgestellt werden.

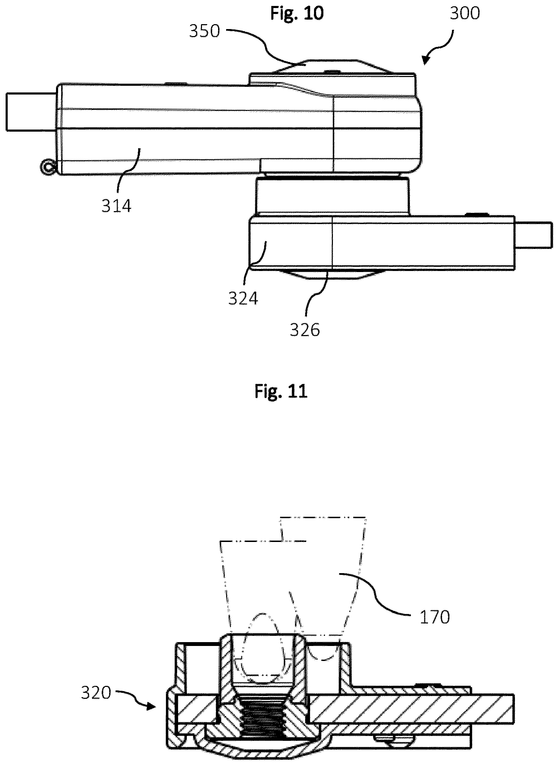

Die zuvor genannten Berührschutzelemente 324, 325, 326 des zweiten Verbindungsteils 320 bestehen aus einem elektrisch isolierenden Material und verhindern ein ungewolltes Berühren von strom- und spannungsführenden Teilen des zweiten Verbindungsteils 320. Dies wird auch anschaulich in der Fig. 11 durch die genormten Prüffinger 170 dargestellt, die aufgrund der zuvor genannten Berührschutzelemente strom- und spannungsführende Teile des zweiten Verbindungsteils 320 des Modulverbinders 300 nicht berühren können.

Das Beispiel des Modulverwenders 300 ist somit im nicht verbundenen Zustand zumindest teilweise berührgeschützt. Das zweite Verbindungselement 320 ist berührgeschützt ausgebildet, da ein genormten Prüffinger 170 nicht mit dem ersten Leiterelement in Berührung kommt (siehe Figur 11). Das erste Verbindungselement 310 ist nicht vollständig berührgeschützt ausgebildet, da ein genormte Prüffinger 170 das erste Kontaktelement 312 berühren kann.

Figur 9 zeigt eine schematische Schnittansicht eines weiteren Beispiels eines Modulverbinders 300 im verbundenen Zustand bzw. in einem zweiten Betriebszustand. In dem verbundenen Zustand ist das Befestigungselements 330 in der Endposition des Befestigungselements 330 angeordnet und die Kontaktflächen 312a und 321a sind in direktem Kontakt zum Bereitstellen einer elektrischen Verbindung zwischen dem ersten Verbindungsteil 310 und dem zweiten Verbindungsteil 320.

In der Endposition ist das Befestigungselement 330, d. h. eine Schraube, in einer Gewindebuchse, welche das Gegenelement 327 ausbildet, mit dem der Körperabschnitt 331 des Befestigungselements 330 in der Endposition des Befestigungselements 330 fixiert wird, angeordnet. Die Fixierung ist hierbei eine Verschraubung und bildet eine form- oder kraftschlüssige Verbindung zwischen dem Befestigungselement 330 und dem Gegenelement 327 aus. In der Endposition des Befestigungselements 330 ist das Befestigungselement 330, insbesondere der Körperabschnitt 332, des Befestigungselements 330 derart tief in das Gegenelement 327 ein gedreht, dass der Kopfabschnitt 331 des Befestigungselements 330 benachbart oder direkt anliegend an dem ersten Leiterelement 311 ist. Somit kann eine geeignete und zuverlässige Befestigung des ersten Verbindungsteils 310 bzw. des ersten weiter Elements 311 und des zweiten Verbindungsteils 320 bzw. zweiten Leiterelements 321 bereitgestellt werden. Hinzukommend kann in der Endposition des Befestigungselement 330 das Befestigungselement 330 auch als elektrischer Leiter zwischen dem ersten Verbindungselement und dem zweiten Verbindungselement 320 dienen.

Ferner sind, wenn das Befestigungselements 330 in der Endposition ist, bzw. der Modulverbinder 300 in dem verbundenen Zustand ist, die Kontaktfläche 312a des ersten Kontaktelements 312 und die Kontaktfläche 321a des zweiten Leiter Elements 321 direkt aufeinander, sodass in diesem zweiten Zustand eine elektrisch leitende Verbindung zwischen dem ersten Leiterelement 311 des ersten Verbindungsteils 310 und dem zweiten Leiterelement 321 des zweiten Verbindungsteils 320 besteht. Die Kontaktflächen 312a und 321a sollten hierbei eine möglichst große Oberfläche aufweisen, um einen Übergangswiderstand zwischen den beiden Kontaktflächen 312a und 321a möglichst klein zu halten.

Durch das Ineinandergreifen des vor Berührung geschützten zweiten Verbindungsteils 320 und des nicht vollständig vor Berührung geschützten ersten Verbindungsteils 310 wird im verbundenen Zustand ein vollständig berührgeschützter Modulverbinder 300 bereitgestellt, da lediglich vollständig berührgeschütze Teile des Modulverbinders von einem Benutzer berührbar sind (siehe Figur 10).

Figur 10 zeigt eine Außenansicht eines weiteren Beispiels eines Modulverbinders 300 im verbundenen Zustand. Der Modulverbinder 300 weist ein erstes äußeres Berührschutzelement 314, ein zweites äußeres Berührschutzelement 324, ein zweites weiteres Berührschutzelement 326, und ein Abdeckelemente 350 auf, mit welchen ein geeigneter Berührschutz von den elektrisch leitfähigen Komponenten bzw. Elementen des Modulverbindung 300 bereitgestellt werden kann. Das erste äußere Berührschutzelement 314 ist in diesem Fall zweiteilig, d. h. mit einer Oberseite und einer Unterseite, ausgebildet, wobei in der Oberseite das Abdeckelement 350 angeordnet ist.

Figur 11 zeigt eine schematische Schnittansicht eines weiteren Beispiels eines zweiten Verbindungsteils 320. Das zweite Verbindungsteil 320 ist hierbei berührgeschützt ausgebildet, da keiner der Prüffinger 170 ein stromleitendes Element des zweiten Verbindungsteils 320 erreicht bzw. erreichen kann.

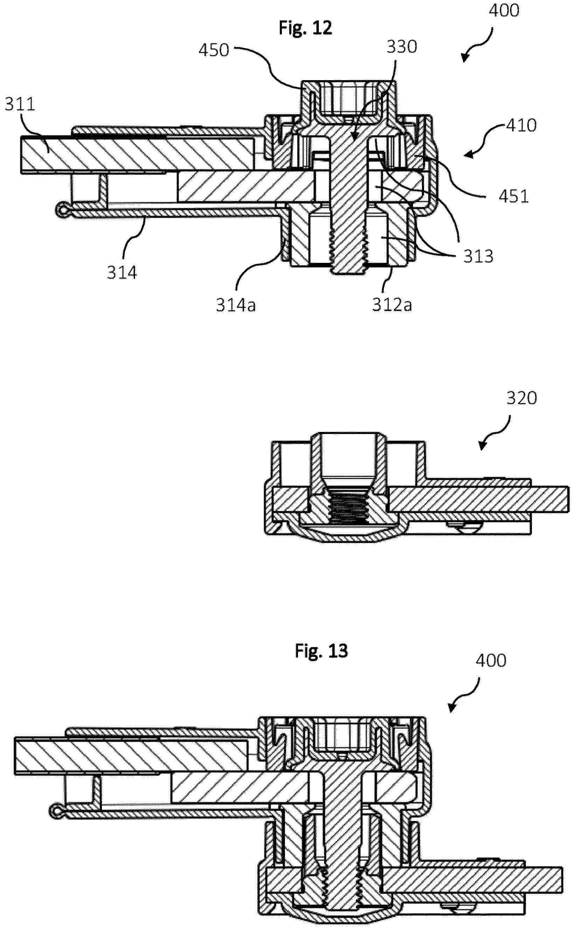

Figur 12 zeigt eine schematische Schnittansicht eines weiteren Beispiels eines Modulverbinders 400 im nicht-verbundenen Zustand. Der Modulverbinder 400 unterscheidet sich von dem Beispiel des Modulverbindung 300 aus den Figuren 8 bis 11 darin, dass das Halteelement 451 und das Abdeckelement 450 nicht einteilig, d. h. als zwei separate Teile, ausgebildet sind. Das Halteelement 451 hält das Befestigungselement 330 in der Parkposition. Das Abdeckelement 450 ist als eine elektrisch isolierende Umhüllung des Kopfabschnitts 331 des Befestigungselements 330 ausgebildet. Die Umhüllung ist hierbei direkt an dem Kopfabschnitt 331 des Befestigungselement 330 befestigt bzw. bereitgestellt. Somit kann ein alternativer Berührschutz des Kopfabschnitts 331 des Befestigungselement 330 bereitgestellt werden. Mit anderen Worten ausgedrückt unterscheidet sich das Beispiel des Modulverbinders 300 von dem Beispiel des Modulverbinders 400 dadurch, dass lediglich der erste Verbindungsteil 410 verschieden ist.

Figur 13 zeigt eine schematische Schnittansicht eines weiteren Beispiels eines Modulverbinders 400 im verbundenen Zustand. Hierbei besteht auch das Beispiel aus einem teilweise berührgeschützten ersten Verbindungsteil 410 und einem vollständig berührgeschützten zweiten Verbindungsteil 320, welche im verbundenen Zustand einen vollständig berührgeschützten Modulverbinder 400 bereitgestellt.

Der erfindungsgemäße Modulverbinder kann hierbei in Form eines Baukastens bereitgestellt werden, sodass der Modulverbinder variabel und je nach Wunsch oder Belang erstellt und zusammengebaut werden kann. Damit kann zusätzlich die Flexibilität in der Anwendung des Modulverbinders bereitgestellt werden,

Die vorliegende Erfindung ist dabei allerdings nicht auf die vorhergehenden bevorzugten Ausführungsbeispiele beschränkt, solange sie vom Gegenstand der folgenden Ansprüche umfasst ist. Ergänzend wird darauf hingewiesen, dass die Begriffe "umfassend" und "aufweisend" keine anderen Elemente ausschließen und die unbestimmten Artikel "eine" oder "ein" keine Vielzahl ausschließen. Darüber hinaus wird darauf hingewiesen, dass Merkmale oder Schritte, die mit Verweis auf eines der obigen Ausführungsbeispiele beschrieben worden sind, auch in Kombination mit anderen Merkmalen anderer oben beschriebener Ausführungsbeispiele verwendet werden können.

### Bezugszeichenliste

- 100: Modulverbinder
- 110: erste Verbindungsteil
- 111: erstes Leiterelement
- 112: erstes Kontaktelement
- 112a: erste Kontaktfläche
- 113: Zwischenraum
- 114: erstes äußeres Berührschutzelement
- 114a: Schutzmanschette
- 115: erstes inneres Berührschutzelement
- 116: erstes weiteres Berührschutzelement
- 120: zweite Verbindungsteil
- 121: zweites Leiterelement
- 122: zweites Kontaktelement
- 122a: zweite Kontaktfläche
- 124: zweites äußeres Berührschutzelement
- 124a: Schutzmanschette
- 125: zweites inneres Berührschutzelement
- 125a: Schutzmanschette
- 126: zweites weiteres Berührschutzelement
- 127: Gegenelement
- 130: Befestigungselement
- 131: Kopfabschnitt
- 131a: Schraubenkopfprofil
- 132: Körperabschnitt
- 140: Trennelement
- 150: Abdeckelement
- 151: Halteelement
- 151a: Durchgangsöffnung
- 170: Prüffinger
- 200: Modulverbinder
- 210: erstes Verbindungsteil
- 250: Abdeckelement
- 251: Halteelement
- 300: Modulverbinder
- 310: erstes Verbindungsteil
- 311: erstes Leiterelement
- 312: erstes Kontaktelement
- 312a: erste Kontaktfläche
- 313: Zwischenraum
- 314: erstes äußeres Berührschutzelement
- 314a: Schutzmanschette
- 315: erstes inneres Berührschutzelement
- 316: erstes weiteres Berührschutzelement
- 320: zweite Verbindungsteil
- 321: zweites Leiterelement
- 321a: Kontaktfläche
- 324: zweites äußeres Berührschutzelement
- 324a: Schutzmanschette
- 325: zweites inneres Berührschutzelement
- 325a: Schutzmanschette
- 326: zweites weiteres Berührschutzelement
- 327: Gegenelement
- 330: Befestigungselement
- 331: Kopfabschnitt
- 331a: Schraubenkopfprofil
- 332: Körperabschnitt
- 350: Abdeckelement
- 351: Halteelement
- 351a: Durchgangsöffnung
- 400: Modulverbinder
- 410: erstes Verbindungsteil
- 450: Abdeckelement
- 451: Halteelement

## Patentansprüche

1. Ein Modulverbinder (100, 200), insbesondere für Batterien für ein Fahrzeug, mit zwei Verbindungsteilen (110, 210, 120), die elektrisch leitend miteinander verbindbar sind,
wobei das erste Verbindungsteil (110, 210) ein erstes Leiterelement (111) und ein erstes Kontaktelement (112) aufweist,
wobei das zweite Verbindungsteil (120) ein zweites Leiterelement (121) und ein zweites Kontaktelement (122) aufweist,
wobei die beiden Verbindungsteile (110, 210, 120) über ein gemeinsames Befestigungselement (130) miteinander verbindbar sind, wobei, wenn die beiden Verbindungsteile (110, 210, 120) miteinander nicht verbunden sind, in dem ersten Verbindungsteil (110, 210) ein Zwischenraum (113) zwischen dem Befestigungselement (130) und dem ersten Kontaktelement (112) erstes Leiterelement (111) bereitgestellt ist und das Befestigungselement (130) in einer Parkposition angeordnet ist,
wobei in dem Zwischenraum (113) zwischen dem Befestigungselement (130) und dem ersten Kontaktelement (112) sowie dem ersten Leiterelement (111) ein Trennelement (140) zur elektrischen Isolierung des Befestigungselements (130) angeordnet ist,
wobei das Trennelement (140) eine Hülsenform aufweist,
wobei zur Herstellung einer elektrisch leitenden Verbindung zwischen den beiden Verbindungsteilen (110, 210, 120) der Modulverbinder (100, 200) ausgebildet ist, durch eine Veränderung der Position des Befestigungselements (130) von einem ersten Zustand, in dem keine elektrische leitende Verbindung zwischen beiden Verbindungsteilen (110, 210, 120) besteht, in einen zweiten, elektrisch leitenden Zustand der beiden Verbindungsteile (110, 210, 120), eine Kontaktfläche (112a) des ersten Kontaktelements (112) des ersten Leiterelements (111) mit einer Kontaktfläche (122a) des zweiten Leiterelements (121) in direkten Kontakt zu bringen,
wobei das erste Verbindungsteil (110, 210) ein erstes, äußeres Berührschutzelement (114) und ein erstes, inneres Berührschutzelement (115) aufweist,
wobei das erste, äußere Berührschutzelement (114) eine äußere, elektrisch isolierende Schutzmanschette (114a) aufweist, die das erste Kontaktelement (112) und das Befestigungselement (130) zumindest teilweise umgibt, wobei das erste, innere Berührschutzelement (115) durch das Befestigungselement (130) gebildet wird.

2. Der Modulverbinder (100, 200) gemäß Anspruch 1,
wobei der Modulverbinder (100, 200) ausgebildet ist, bei einem Öffnen des Befestigungselementes (130), das Befestigungselement (130) in die Parkposition zu bringen.

3. Der Modulverbinder (100, 200) gemäß irgendeinem der vorherigen Ansprüche,
wobei das Trennelement (140) aus einem faserverstärken Kunststoff, insbesondere aus einem glasfaserverstärkter Duroplast, bereitgestellt ist.

4. Der Modulverbinder (100, 200) gemäß Anspruch 3,
wobei das Trennelement (140) aus einem glasfaserverstärkter Duroplast bereitgestellt ist.

5. Der Modulverbinder (100, 200) gemäß irgendeinem der vorherigen Ansprüche,
wobei das erste, innere Berührschutzelement (115) durch das Befestigungselement (130) gebildet wird, wenn sich das Befestigungselement (130) in der Parkposition befindet.

6. Der Modulverbinder (100, 200) nach einem der vorherigen Ansprüche, wobei die elektrisch isolierende Schutzmanschette (114a) das erste Kontaktelement (112) überragt.

7. Der Modulverbinder (100, 200) gemäß irgendeinem der vorherigen Ansprüche,
wobei das erste Verbindungsteil (110, 210) ein Halteelement (151, 251) aufweist,
wobei das Halteelement (151, 251) derart ausgebildet ist, dass das Befestigungselement (130), wenn die beiden Verbindungsteile (110, 210, 120) miteinander nicht verbunden sind, in der Parkposition anordnet ist.

8. Der Modulverbinder (100, 200) gemäß einem der Ansprüche 1 bis 7,
wobei das erste Verbindungsteil (110, 210) ferner ein erstes weiteres Berührschutzelement (116) aufweist,
wobei das erste weitere Berührschutzelement (116) durch ein Abdeckelement (150, 250) des Befestigungselements (130) gebildet ist.

9. Der Modulverbinder (100, 200) gemäß Anspruch 8,
wobei das Abdeckelement (150, 250) eine Durchgangsöffnung (151a) aufweist.

10. Der Modulverbinder (100, 200) gemäß Anspruch 7 oder 8,
wobei das Abdeckelement (150, 250) und das Halteelement (151, 251) gemeinsam ein einteiliges Element ausbilden, und/oder wobei das einteilige Element bestehend aus dem Abdeckelement (150, 250) und dem Halteelement (151, 251) drehbar um eine Rotationsachse des Befestigungselements (130) ist.

11. Der Modulverbinder (100, 200) gemäß irgendeinem der vorherigen Ansprüche,
wobei das Befestigungselement (130) eine Schraube mit einem Kopfabschnitt (131) und einem Körperabschnitt (132) ist,
wobei der Körperabschnitt (132) frei von einem elektrisch isolierenden Material ist.

12. Der Modulverbinder (100, 200) nach irgendeinem der vorherigen Ansprüche, wobei das zweite Verbindungsteil (120) ferner ein zweites äußeres Berührschutzelement (124), ein zweites inneres Berührschutzelement (125), ein weiteres Berührschutzelement (126) und ein Gegenelement (127) zu dem Befestigungselement (130) aufweist,
wobei das zweite äußere Berührschutzelement (124) eine äußere, elektrisch isolierende Schutzmanschette (124a) aufweist, die das zweite Kontaktelement (122) und das zweite Leiterelement (121), das Gegenelement und/oder die Kontaktfläche (121a) des zweiten Leiterelements (121) zumindest teilweise umgibt,
wobei das zweite innere Berührschutzelement (125) an dem Gegenelement (127) angeordnet ist.

13. Der Modulverbinder (100, 200) nach irgendeinem der vorherigen Ansprüche,
wobei die elektrisch isolierende Schutzmanschette (124a) das zweite Kontaktelement (122) überragt.

14. Der Modulverbinder (100, 200) nach Anspruch 12 oder 13,
wobei das zweite innere Berührschutzelement (125) eine elektrisch isolierende Schutzmanschette (125a) ist.
